# EUROPEAN PATENT APPLICATION

(11) **EP 3 712 309 A1**
(43) Date of publication of application: **23.09.2020**
(21) Application number: 18877762.7
(22) Date of filing: 06.11.2018
(51) Int. Cl.: D03D 1/00, B29B 15/12, D03D 11/00, B29K 105/08

(54) **FIBER CONSTRUCT, FIBER-REINFORCED COMPOSITE MATERIAL, AND METHOD FOR MANUFACTURING THESE**

(30) Priority: 17.11.2017 JP 2017222110
(71) Applicant: Kabushiki Kaisha Toyota Jidoshokki, Kariya-shi, Aichi 448-8671 (JP)
(72) Inventor: MAKI, Aya, Kariya-shi Aichi 448-8671 (JP); KAMIYA, Ryuta, Kariya-shi Aichi 448-8671 (JP)
(74) Representative: TBK
(86) International application number: PCT/JP2018/041111
(87) International publication number: WO 2019/098083

(57) **Abstract**

This fiber construct has a tabular shape in which a first flat surface part, a bent part, and a second flat surface part are continuous in a second direction. In the first flat surface part, a binding yarn binds all of a plurality of first fiber layers and a plurality of second fiber layers in a layering direction. The binding yarn is configured so as to be in one form from among a form in which the binding yarn is extended linearly in the bent part and the second flat surface part, a form in which the binding yarn partially binds the first fiber layers and the second fiber layers in the layering direction in the bent part and the second flat surface part, and a form in which the binding yarn is not present in the bent part and the second flat surface part. A second yarn is configured so as to be in one form from among a form in which the second yarn is engaged with only a first yarn in a specific first fiber layer in the bent part and the second flat surface part, and a form in which the second yard partially binds the first fiber layers in the layering direction.

## Description

### TECHNICAL FIELD

The present disclosure relates to a fiber construct and a fiber-reinforced composite material.

### BACKGROUND ART

Fiber-reinforced composite materials are widely used as lightweight structural materials. A reinforced base material for a fiber-reinforced composite material includes a fiber construct. The fiber-reinforced composite material formed to be a matrix by impregnating the fiber construct with resin is used as a structural material for, for example, airplanes, automobiles, and buildings. In some fiber constructs, fiber layers are laminated, and binding threads are used to bind the fiber layers are bound in the laminating direction.

To make the fiber-reinforced composite material usable for a wide variety of purposes, a fiber-reinforced composite material needs to be shaped in accordance with the purposes such as an L-shaped or U-shaped fiber-reinforced composite material. For example, to manufacture the L-shaped or U-shaped fiber-reinforced composite material, its fiber construct also needs to be L-shaped or U-shaped. Such a fiber construct includes a bent portion.

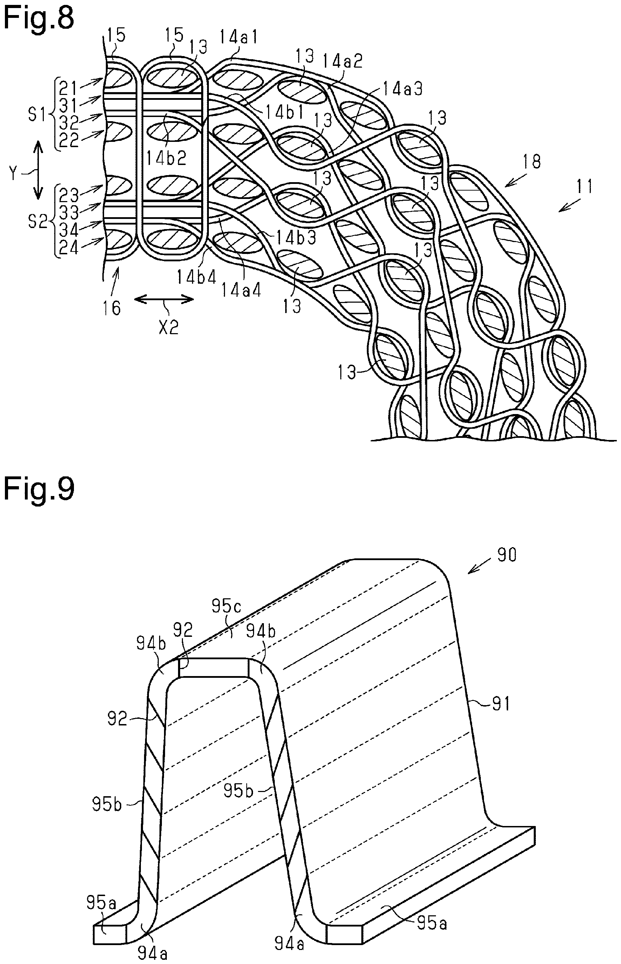

Fig. 9 shows a three-dimensional fiber construct 90, which is described as an example in Japanese Laid-Open Patent Publication No. 2007-291582 (Patent Document 1). The three-dimensional fiber construct 90 includes laminated fiber layers 91 and thickness direction threads 92. The laminated fiber layers 91 are laid out such that continuous fibers are biaxially oriented. The thickness direction threads 92 bind the fiber layers of the laminated fiber layers 91 in the thickness direction. Further, the laminated fiber layer 91 has a three-dimensional plate shape such that bent portions 94a and 94b bent in different directions and flat portions 95a, 95b, and 95c are alternately laid out and continuous with one another.

The continuous fibers used for the three-dimensional fiber construct 90 are generally very small. This prevents the continuous fibers laid out on the outer sides of the bends from stretching. This may generate creases on the inner sides of the bent portions 94a and 94b. In the fiber-reinforced composite material having the three-dimensional fiber construct 90, creases will cause degradation of the physical properties (for example, degradation of strength) and lower the appearance quality.

In the document, a single bent portion 94a is located between a pair of flat portions 95a and 95b. In one of the flat portions, namely, the flat portion 95b, the thickness direction threads 92 are laid out to diagonally intersect the fiber layers. In the other one of the flat portions, namely, the flat portion 95a, the thickness direction threads 92 are laid out to be orthogonal to the fiber layers.

In the document, during bending of the laminated fiber layer 91, bending and compressing the laminated fiber layer 91 in the thickness direction attempt to deviate non-bent portions of the continuous fibers laid out on the outer sides of the bent portions 94a and 94b. When the continuous fibers and the thickness direction threads 92, which are laid out in the non-bent portions, move such that the deviation is tolerated, the generation of creases is limited in the bent portions 94a and 94b.

### PRIOR ART DOCUMENTS

### Patent Documents

Patent Document 1: Japanese Laid-Open Patent Publication No. 2007-291582

### SUMMARY OF THE INVENTION

### Problems that the Invention is to Solve

However, in order to limit the generation of creases in the bent portions 94a and 94b, the three-dimensional fiber construct 90 described in the document needs to be structured so as to tolerate deviation of the thickness direction threads 92. To tolerate the deviation of the thickness direction threads 92, the laminated fiber layers 91 need to be compressed in the thickness direction during bending. This manufacturing process is troublesome.

It is an objective of the present disclosure to provide a fiber construct and a fiber-reinforced composite material that can be easily manufactured while limiting the generation of creases in bent portions.

### Means for Solving the Problem

A fiber construct that solves the above-described problem includes first fiber layers including a first yarn and second fiber layers including a second yarn that intersects the first yarn, wherein the first fiber layers and the second fiber layers are laminated, wherein an extending direction of a yarn main axis of the first yarn is referred to as a first direction, and an extending direction of a yarn main axis of the second yarn is referred to as a second direction, wherein the fiber construct has a plate shape such that at least a first flat portion, a bent portion, and a second flat portion are continuous with one another in the second direction, wherein a direction in which the first fiber layers and the second fiber layers are laminated is referred to as a laminating direction, wherein in the first flat portion, the first yarn extends straight in the first direction and the second yarn extends straight in the second direction, wherein the fiber construct further includes a binding thread that binds all the first fiber layers and the second fiber layers in the laminating direction in the first flat portion, wherein the binding thread is configured to be in any one of a mode of extending straight in the bent portion and the second flat portion, a mode of binding the first fiber layers and the second fiber layers partially in the laminating direction in the bent portion and the second flat portion, and a mode of being absent in the bent portion and the second flat portion, wherein in the bent portion and the second flat portion, the second yarn is configured to be in any one of a mode of engaging with only the first yarn of a specific one of the first fiber layers and a mode of binding the first fiber layers partially in the laminating direction.

In this structure, in the first flat portion, the binding threads prevent the first fiber layers and the second fiber layers from being scattered.

More specifically, in the first flat portion, the binding threads bind all the first fiber layers and the second fiber layers. In the bent portion and the second flat portion, the binding threads do not bind all the first fiber layers and the second fiber layers in the laminating direction, and the second yarns do not bind all the first fiber layers and the second fiber layers in the laminating direction. Thus, on the inner side of the bent portion, the movement of the first yarns and the second yarns caused by bending is allowed. This limits, for example, situations in which the second yarns are bent and the first yarns are put together to be laminated in multi-stages. Accordingly, the generation of creases on the inner sides of the bent portion is limited. The fiber construct having the above-described structure is formed by controlling the binding threads when weaving is performed by a loom. Thus, for example, the fiber construct does not have to be compressed in order to limit the generation of creases in the bent portion. Accordingly, the fiber construct can be manufactured easily.

Further, in the fiber construct, in the first flat portion, the first fiber layer may be arranged between a pair of the second fiber layers adjacent to each other in the laminating direction, and in the bent portion and the second flat portion, the second yarn of the pair of the second fiber layers adjacent to each other in the laminating direction with the specific one of the first fiber layers located in between may be in a mode of engaging with each one of the first yarns of the specific one of the first fiber layers alternately from opposite sides in the laminating direction.

In this structure, in the bent portion and the second flat portion, the second yarns are engaged with only the first yarns of a specific one of the first fiber layers from the opposite sides in the laminating direction. Thus, the first yarns and the second yarns are engaged with each other. This prevents the first fiber layers and the second fiber layers from being scattered.

Further, in the fiber construct, in the first flat portion, a first laminate and a second laminate may be laid out in the laminating direction, the first laminate may be formed by arranging a pair of the second fiber layers between a pair of the first fiber layers adjacent to each other in the laminating direction, the second laminate may be formed by arranging a pair of the second fiber layers between a pair of the first fiber layers adjacent to each other in the laminating direction, and in the bent portion and the second flat portion, in the first laminate and the second laminate, the pair of the second fiber layers arranged between the first fiber layers adjacent to each other in the laminating direction may include the second yarns, a part of the second yarns being in a mode of engaging with the first yarn of the first fiber layers so that the pair of the first fiber layers adjacent to each other in the laminating direction are bound to each other partially in the laminating direction, and a part of the second yarns of one of the laminates of the first laminate and the second laminate may be in a mode of engaging with the first yarn of the other one of the laminates of the first laminate and the second laminate so that the first laminate and the second laminate are bonded to each other in the laminating direction.

In this structure, in the bent portion and the second flat portion, in the first laminate and the second laminate, the first fiber layers adjacent to each other in the laminating direction are bound by the second yarns partially in the laminating direction. Further, the first laminate and the second laminate are bonded to each other in the laminating direction. This prevents the bent portion and the second flat portion from being scattered in the laminating direction.

Further, in the above-described fiber construct, a dimension of the fiber construct extending through an inner side of the bent portion in the second direction may be substantially the same as a dimension of the fiber construct extending through an outer side of the bent portion in the second direction.

A fiber-reinforced composite material that solves the above-described problem is formed by impregnating a reinforcing base material with matrix resin, characterized in that the reinforcing base material is formed by the above-described fiber construct.

In this structure, in the first flat portion, the binding threads prevent the first fiber layers and the second fiber layers from being scattered

More specifically, in the first flat portion, the binding threads bind all the first fiber layers and the second fiber layers. In the bent portion and the second flat portion, the binding threads do not bind all the first fiber layers and the second fiber layers, and the second yarns do not bind all the first fiber layers and the second fiber layers. Thus, on the inner side of the bent portion, the movement of the first yarns and the second yarns caused by bending is allowed. This limits, for example, situations in which the second yarns are bent and the first yarns are put together to be laminated in multi-stages. Accordingly, the generation of creases on the inner sides of the bent portion is limited. The fiber construct having the above-described structure is formed by controlling the binding threads when weaving is performed by a loom. Thus, for example, the fiber construct does not have to be compressed in order to limit the generation of creases in the bent portion. Accordingly, the fiber construct can be manufactured easily. In the fiber-reinforced composite material with the fiber construct used as a reinforcing base material, the part corresponding to the bent portion of the fiber construct is prevented from being lowered in strength by creases.

A manufacturing method for the above-described fiber construct is provided as another aspect of above-described disclosure. That is, the manufacturing method includes preparing first fiber layers including a first yarn, preparing second fiber layers including a second yarn that intersects the first yarn, laminating the first fiber layers and the second fiber layers with an extending direction of a yarn main axis of the first yarn referred to as a first direction and an extending direction of a yarn main axis of the second yarn referred to as a second direction, a direction in which the first fiber layers and the second fiber layers are laminated being referred to as a laminating direction, shaping the fiber construct into a plate such that at least a first flat portion, a bent portion, and a second flat portion are continuous with one another in the second direction, extending the first yarn straight in the first direction and extending the second yarn straight in the second direction in the first flat portion, binding all the first fiber layers and the second fiber layers in the laminating direction in the first flat portion using a binding thread, configuring the binding thread to be in any one of (a) a mode of extending straight in the bent portion and the second flat portion, (b) a mode of binding the first fiber layers and the second fiber layers partially in the laminating direction in the bent portion and the second flat portion, and (c) a mode of being absent in the bent portion and the second flat portion, and configuring, in the bent portion and the second flat portion, the second yarn to be in any one of a mode of engaging with only the first yarn of a specific one of the first fiber layers and a mode of binding the first fiber layers partially in the laminating direction.

In the present disclosure, a fiber construct and a fiber-reinforced composite material can be easily manufactured while limiting the generation of creases in bent portions

### BRIEF DESCRIPTION OF THE DRAWINGS

Fig. 1 is a perspective view schematically showing a fiber-reinforced composite material according to a first embodiment of the present disclosure.
Fig. 2 is a schematic cross-sectional view showing the fiber construct prior to being shaped in the first embodiment.
Fig. 3 is a schematic cross-sectional view showing the fiber construct of Fig. 2 subsequent to being shaped.
Fig. 4 is a schematic cross-sectional view showing the fiber construct prior to being shaped according to a second embodiment of the present disclosure.
Fig. 5 is a schematic cross-sectional view showing the fiber construct of Fig. 4 subsequent to being shaped.
Fig. 6 is a side view schematically showing the fiber construct according to a modification of the present disclosure.
Fig. 7 is a schematic cross-sectional view showing the fiber construct according to a modification of the first embodiment.
Fig. 8 is a schematic cross-sectional view showing the fiber construct according to a modification of the second embodiment.
Fig. 9 is a diagram showing the related art.

### MODES FOR CARRYING OUT THE INVENTION

### First Embodiment

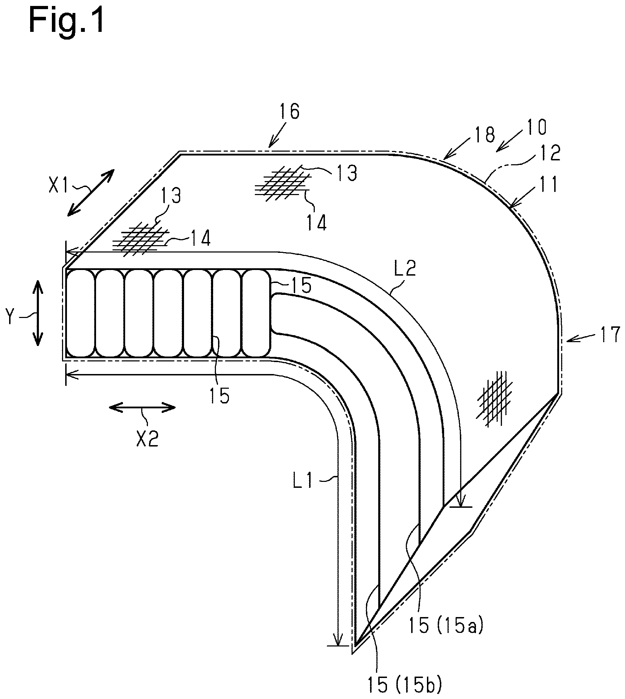

A fiber construct and a fiber-reinforced composite material according to a first embodiment of the present disclosure will now be described with reference to Figs. 1 to 3.

Referring to Fig. 1, a fiber-reinforced composite material 10 is formed by impregnating a fiber construct 11, which serves as a reinforcing base material, with matrix resin 12. For example, thermosetting epoxy resin is used for the matrix resin 12. The fiber construct 11 is formed by shaping a flat fiber construct 11 into an L-shape. The fiber construct 11 includes a first flat portion 16, a second flat portion 17, and a bent portion 18 located between the first flat portion 16 and the second flat portion 17. The fiber construct 11 has a three-dimensional plate shape such that the first flat portion 16, the bent portion 18, and the second flat portion 17 are continuous with one another in sequence.

The fiber construct 11 in a flat state prior to being shaped will now be described.

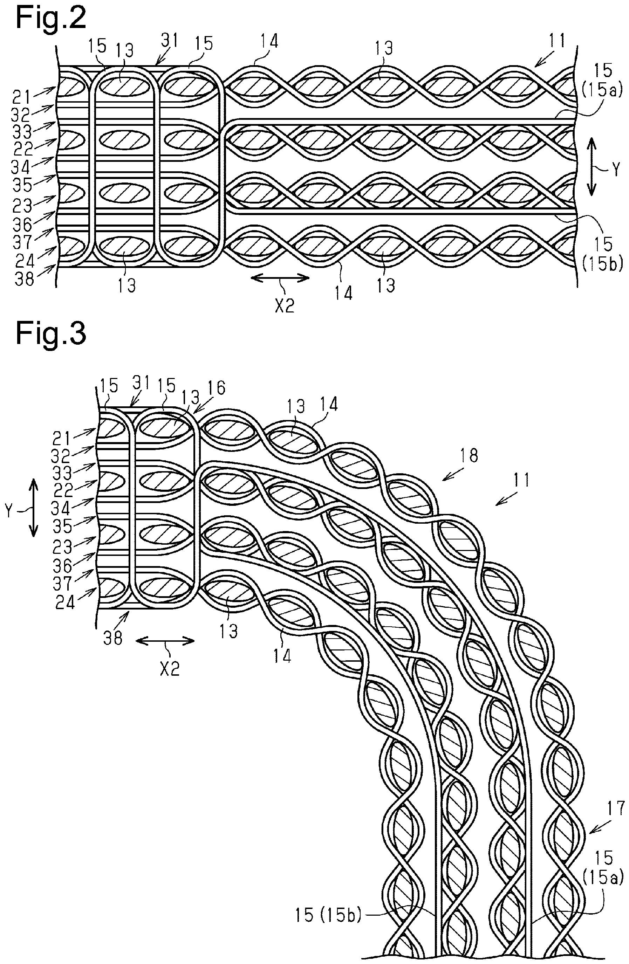

While Fig. 2 shows the fiber construct 11 prior to being shaped, Fig. 1 shows the fiber construct 11 subsequent to being shaped into an L-shape. In Fig. 1, only the first flat portion 16 can be referred to as a state prior to being shaped.

As shown in Figs. 1 and 2, the fiber construct 11 is formed by laminating fiber layers. The direction in which the fiber layers are laminated is referred to as a laminating direction Y of the fiber construct 11. In Figs. 1 and 2, the double-headed arrow indicating the laminating direction Y indicates the laminating direction Y of the first flat portion 16. The fiber construct 11 includes weft yarns 13, which serve as first yarns, and warp yarns 14, which serve as second yarns. The fiber construct 11 also includes binding threads 15 that bind the fiber layers in the laminating direction Y.

In the fiber construct 11, the weft yarns 13 and the warp yarns 14 extend in directions that intersect with each other. The extending direction of a yarn main axis of the weft yarns 13 is referred to as a first direction X1, and the extending direction of a yarn main axis of the warp yarns 14 is referred to as a second direction X2. In Fig. 1, the double-headed arrows indicating the first direction X1 and the second direction X2 indicate the first direction X1 and the second direction X2 of the first flat portion 16, respectively. The weft yarns 13, the warp yarns 14, and the binding threads 15 are fiber bundles that are formed by binding fibers. The fibers may be organic fibers or inorganic fibers. The organic fibers include, for example, aramid fibers, poly-p-phenylene benzobisoxazole fibers, and ultra-high molecular weight polyethylene fibers. The inorganic fibers include, for example, carbon fibers, glass fibers, and ceramic fibers.

The fiber construct 11 includes weft yarn layers, which serve as fiber layers formed by laying out the weft yarns 13 in the second direction X2. All the weft yarns 13 extend substantially straight in the first direction X1 and do not engage with the warp yarns 14 through folding. As shown in Fig. 2, the weft yarn layers include a first weft yarn layer 21, a second weft yarn layer 22 adjacent to the first weft yarn layer 21 in the laminating direction Y, a third weft yarn layer 23 adjacent to the second weft yarn layer 22 in the laminating direction Y, and a fourth weft yarn layer 24 adjacent to the third weft yarn layer 23 in the laminating direction Y. That is, the first weft yarn layer 21 to the fourth weft yarn layer 24 are first fiber layers each including the weft yarn 13, which serves as the first yarn. Fig. 2 shows the fiber construct 11 in the cross-section perpendicular to the first direction X1 (i.e., plane parallel to second direction X2 and laminating direction Y). Thus, Fig. 2 shows the cross-sections of the first to fourth weft yarn layers 21 to 24 and the weft yarns 13.

Further, the fiber construct 11 includes warp yarn layers, which are formed by laying out the warp yarns 14 in the first direction X1. As shown in Fig. 2, the fiber construct 11 includes, as the warp yarn layers, a first warp yarn layer 31 and a second warp yarn layer 32 on the opposite sides of the first weft yarn layer 21 in the laminating direction Y and a third warp yarn layer 33 and a fourth warp yarn layer 34 on the opposite sides of the second weft yarn layer 22 in the laminating direction Y. Further, the fiber construct 11 includes, as the warp yarn layers, a fifth warp yarn layer 35 and a sixth warp yarn layer 36 on the opposite sides of the third weft yarn layer 23 in the laminating direction Y and a seventh warp yarn layer 37 and a eighth warp yarn layer 38 on the opposite sides of the fourth weft yarn layer 24 in the laminating direction Y. That is, the first warp yarn layer 31 to the eighth warp yarn layer 38 are second fiber layers each including the warp yarn 14, which serves as the second yarn.

The fiber construct 11 in the L-shaped state will now be described.

Referring to Figs. 1 and 3, the bent portion 18 of the fiber construct 11 is bent around the axis extending in the first direction X1. In Figs. 1 and 3, the fiber construct 11 is L-shaped. Thus, the laminating direction Y of the second flat portion 17 subsequent to being shaped is substantially parallel to the second direction X2 of the first flat portion 16 (horizontal direction on the plane), and the second direction X2 of the second flat portion 17 subsequent to being shaped is substantially parallel to the laminating direction Y of the first flat portion 16 (vertical direction on the plane). Thus, in the fiber construct 11, the first flat portion 16, the bent portion 18, and the second flat portion 17 are made continuous with one another in sequence in the second direction X2 by the warp yarns 14. In the first flat portion 16, the weft yarns 13 are laid out in the second direction X2, and each weft yarn 13 extends straight in the first direction X1. Additionally, in the first flat portion 16, each warp yarn 14 extends straight in the second direction X2.

As shown in Fig. 3, in the bent portion 18, the weft yarns 13 are laid out along the arc of the bent portion 18. Further, in the bent portion 18, each warp yarn 14 extends so as to wave in the laminating direction Y microscopically and extends along the arc of the bent portion 18 macroscopically. In the second flat portion 17, the weft yarns 13 are laid out in the extending direction of the warp yarns 14 (second direction X2). Further, in the second flat portion 17, instead of extending straight, each warp yarn 14 extends so as to wave in the laminating direction Y microscopically and extends in the second direction X2 macroscopically.

As both shown in Figs. 2 and 3, in the first flat portion 16, the first to fourth weft yarn layers 21 to 24 and the first to eighth warp yarn layers 31 to 38 are bound by the binding threads 15 in the laminating direction Y. More specifically, in the first flat portion 16, all the first to fourth weft yarn layers 21 to 24 and the first to eighth warp yarn layers 31 to 38 are bound by the binding threads 15 in the laminating direction Y.

As both shown in Figs. 2 and 3, in the first flat portion 16, the warp yarns 14 of the first to eighth warp yarn layers 31 to 38 extend straight in the second direction X2. Further, the first weft yarn layer 21 is arranged between the first warp yarn layer 31 and the second warp yarn layer 32 adjacent to each other in the laminating direction Y, and the warp yarns 14 of the first warp yarn layer 31 and the second warp yarn layer 32, with the first weft yarn layer 21 located in between in the laminating direction Y, are parallel to each other. In the same manner, the second weft yarn layer 22 is arranged between the third warp yarn layer 33 and the fourth warp yarn layer 34 adjacent to each other in the laminating direction Y, and the warp yarns 14 of the third warp yarn layer 33 and the fourth warp yarn layer 34, with the second weft yarn layer 22 located in between in the laminating direction Y, are parallel to each other. In the same manner, the third weft yarn layer 23 is arranged between the fifth warp yarn layer 35 and the sixth warp yarn layer 36 adjacent to each other in the laminating direction Y, and the warp yarns 14 of the fifth warp yarn layer 35 and the sixth warp yarn layer 36, with the third weft yarn layer 23 located in between in the laminating direction Y, are parallel to each other. In the same manner, the fourth weft yarn layer 24 is arranged between the seventh warp yarn layer 37 and the eighth warp yarn layer 38 adjacent to each other in the laminating direction Y, and the warp yarns 14 of the seventh warp yarn layer 37 and the eighth warp yarn layer 38, with the fourth weft yarn layer 24 located in between in the laminating direction Y, are parallel to each other.

The binding threads 15 are used to keep the shape of the first flat portion 16. The mode of folding the binding threads 15 will now be described. The binding threads 15 are arranged so as to be laid out partially in parallel to the warp yarns 14 and folded through the outer surfaces of the weft yarns 13 of the first weft yarn layer 21, which is the uppermost layer of the first flat portion 16. Further, the binding threads 15 are arranged so as to be extended straight through the first flat portion 16 in the laminating direction Y and folded through the outer surface of the weft yarns 13 of the fourth weft yarn layer 24, which is the lowermost layer. That is, the binding threads 15 bind the weft yarns 13 and the warp yarns 14 in the laminating direction Y by repeatedly being folded so as to entangle the surroundings of the cross-sections of the weft yarns 13 of the first weft yarn layer 21 from the outer side of the fiber construct 11 (upper side in Fig. 2) and being folded so as to entangle the surroundings of the cross-sections of the weft yarns 13 of the fourth weft yarn layer 24 from the outer side of the fiber construct 11 (lower side in Fig. 2).

In Figs. 2 and 3, the first direction X1 is perpendicular to the plane. In the binding threads 15 adjacent to each other in the first direction X1, the position of the weft yarn 13 corresponding to the binding thread 15 folded at the first weft yarn layer 21 or the fourth weft yarn layer 24 is deviated in the second direction X2. For example, in the binding threads 15 adjacent to each other in the direction perpendicular to the planes of Figs. 2 and 3, the position of the weft yarn 13 corresponding to a part where the front binding thread 15 is folded at the first weft yarn layer 21 and the position of the weft yarn 13 corresponding to a part where the rear binding thread 15 is folded at the first weft yarn layer 21 are deviated in the second direction X2. Further, all the first to fourth weft yarn layers 21 to 24 and the first to eighth warp yarn layers 31 to 38 are bound by the binding threads 15 in the laminating direction Y.

The folding positions of the binding thread 15 are located at equal intervals in the second direction X2, and the binding threads 15 extend through the first flat portion 16 at equal intervals in the second direction X2. In the present embodiment, each binding thread 15 is folded for one weft yarn 13. The binding threads 15 are extended straight through the first flat portion 16 in the laminating direction Y and folded to have parts extending along the weft yarns 13 laid out in the laminating direction Y. This causes the binding threads 15 to restrict the weft yarns 13 from moving in the second direction X2.

The second flat portion 17 and the bent portion 18 include the first to fourth weft yarn layers 21 to 24 and the first to eighth warp yarn layers 31 to 38. In addition, in the second flat portion 17 and the bent portion 18, movement of the weft yarns 13 and warp yarns 14 caused by bending is allowed.

Thus, as shown in Fig. 1, in the fiber construct 11, the dimension L1 extending through the inner side of the bent portion 18 in the dimension extending in the second direction X2 is the same as or just slightly deviates from the dimension L2 extending through the outer side of the bent portion 18. That is, the dimension L1 is substantially the same as the dimension L2. In the fiber construct 11 of Fig. 2 prior to being shaped, the part corresponding to the dimension L1 has the same length as the part corresponding to the dimension L2.

As shown in Fig. 3, in the bent portion 18 and the second flat portion 17, the warp yarns 14 of the first warp yarn layer 31 and the second warp yarn layer 32, with the first weft yarn layer 21 located in between in the laminating direction Y, are in a mode of being folded on the outer side in the laminating direction Y and engaged with only the weft yarns 13 of the first weft yarn layer 21, which is a specific one of the first fiber layers. Further, in the bent portion 18 and the second flat portion 17, the warp yarns 14 of the first warp yarn layer 31 and the second warp yarn layer 32, with the first weft yarn layer 21 located in between in the laminating direction Y, are in a mode of being folded and engaged on the inner side in the laminating direction Y of the weft yarns 13 adjacent to each other in the second direction X2. That is, the warp yarns 14 of the first warp yarn layer 31 and the second warp yarn layer 32 are repeatedly engaged with the weft yarns 13 of the first weft yarn layer 21 alternately from the opposite sides in the laminating direction Y. In this manner, in the present embodiment, the warp yarns 14 of the first warp yarn layer 31 and the second warp yarn layer 32 are not engaged with the weft yarns 13 of the second weft yarn layer 22 to the fourth weft yarn layer 24 and are engaged with only the weft yarns 13 of the first weft yarn layer 21, which serves as a specific weft yarn layer. Here, the warp yarns 14 of the first warp yarn layer 31 and the second warp yarn layer 32 are classified into two groups, and a focus is made on a single weft yarn 13 of the first weft yarn layer 21. When the warp yarn 14 of the first group is engaged with the single weft yarn 13 so as to entangle the surroundings of the cross-section of the single weft yarn 13 from one side in the laminating direction Y (for example, outer side of bend), the warp yarn 14 of the second group is engaged with the single weft yarn 13 so as to entangle the surroundings of the cross-section of the single weft yarn 13 from the other side in the laminating direction Y (for example, inner side of bend). In the weft yarn 13 adjacent to the single weft yarn 13 in the second direction X2, the warp yarn 14 of the first group is engaged with the adjacent weft yarn 13 so as to entangle the surroundings of the cross-section of the adjacent weft yarn 13 on the other side in the laminating direction Y, and the warp yarn 14 of the second group is engaged with the adjacent weft yarn 13 so as to entangle the surroundings of the cross-section of the adjacent weft yarn 13 on one side in the laminating direction Y.

Likewise, the warp yarns 14 of the third warp yarn layer 33 and the fourth warp yarn layer 34, with the second weft yarn layer 22 located in between in the laminating direction Y, are in a mode of being folded on the outer and inner sides in the laminating direction Y and alternately engaged with only the weft yarns 13 of the second weft yarn layer 22, which is a specific one of the first fiber layers. That is, the warp yarns 14 of the third warp yarn layer 33 and the fourth warp yarn layer 34 are repeatedly engaged with the weft yarns 13 of the second weft yarn layer 22 alternately from the opposite sides in the laminating direction Y.

The warp yarns 14 of the fifth warp yarn layer 35 and the sixth warp yarn layer 36, with the third weft yarn layer 23 located in between in the laminating direction Y, are in a mode of being folded on the outer and inner sides in the laminating direction Y and alternately engaged with only the weft yarns 13 of the third weft yarn layer 23, which is a specific one of the first fiber layers. That is, the warp yarns 14 of the fifth warp yarn layer 35 and the sixth warp yarn layer 36 are repeatedly engaged with the weft yarns 13 of the third weft yarn layer 23 alternately from the opposite sides in the laminating direction Y.

Furthermore, the warp yarns 14 of the seventh warp yarn layer 37 and the eighth warp yarn layer 38, with the fourth weft yarn layer 24 located in between in the laminating direction Y, are in a mode of being folded on the outer and inner sides in the laminating direction Y and alternately engaged with only the weft yarns 13 of the fourth weft yarn layer 24, which is a specific one of the first fiber layers. That is, the warp yarns 14 of the seventh warp yarn layer 37 and the eighth warp yarn layer 38 are repeatedly engaged with the weft yarns 13 of the fourth weft yarn layer 24 alternately from the opposite sides in the laminating direction Y.

In the bent portion 18 and the second flat portion 17, the binding threads 15 are classified into two groups. The first group includes a binding thread 15a that is in a mode of being arranged between the first weft yarn layer 21 and the second weft yarn layer 22 in the laminating direction Y and extended straight in the second direction X2. Thus, in the bent portion 18 and the second flat portion 17, the binding thread 15a of the first group is not folded along the surroundings of the cross-sections of any weft yarns 13 and not engaged with the weft yarns 13. That is, in the bent portion 18 and the second flat portion 17, the binding thread 15 is not folded so as to entangle the surroundings of the cross-sections of the weft yarns 13. Further, the second group of the two groups of the binding threads 15 includes a binding thread 15b. In the bent portion 18 and the second flat portion 17, the binding thread 15b is in a mode of being arranged between the third weft yarn layer 23 and the fourth weft yarn layer 24 in the laminating direction Y and extended straight in the second direction X2. The binding thread 15b is not folded along the surroundings of the cross-sections of any weft yarns 13 and not engaged with the weft yarns 13.

The above-described embodiment has the following advantages.
(1-1) In the bent portion 18 and the second flat portion 17 of the fiber construct 11, the binding threads 15 and the warp yarns 14 do not bind all the first to fourth weft yarn layers 21 to 24 and the first to eighth warp yarn layers 31 to 38 in the laminating direction Y and the second direction X2. Thus, in the bent portion 18, the weft yarns 13 and the warp yarns 14 are allowed to move in the second direction X2. This limits, for example, situations in which the warp yarns 14 are bent and the weft yarns 13 are put together to be laminated in multi-stages. Accordingly, the generation of creases on the inner sides of the bent portion 18 is limited. The generation of creases on the inner sides of the bent portion 18 is limited just by controlling the binding threads 15 during weaving of the fiber construct 11. This allows the fiber construct 11 to be easily manufactured with the generation of creases limited.
(1-2) The binding threads 15 bind the weft yarns 13 of the first flat portion 16 in the laminating direction Y and the second direction X2 and function as warp yarns in the bent portion 18 and the second flat portion 17. This allows the binding threads 15 to reinforce the bent portion 18 and the second flat portion 17.
(1-3) In the first flat portion 16, the weft yarns 13 and the warp yarns 14 extend straight, and are bound by the binding threads 15 in the laminating direction Y. Thus, in the first flat portion 16, the binding threads 15 prevent all the first to fourth weft yarn layers 21 to 24 and the first to eighth warp yarn layers 31 to 38 from being scattered.
(1-4) In the fiber construct 11, the generation of creases on the inner side of the bent portion 18 is limited. Thus, in the fiber-reinforced composite material 10 with the fiber construct 11 used as a reinforcing base material, the part corresponding to the bent portion 18 is prevented from being lowered in strength by creases.
(1-5) In the bent portion 18 and the second flat portion 17 of the fiber construct 11, the binding threads 15 and the warp yarns 14 do not bind all the first to fourth weft yarn layers 21 to 24 and the first to eighth warp yarn layers 31 to 38 in the entire laminating direction Y and the entire second direction X2. This allows the fiber construct 11 to be bent at the part corresponding to the bent portion 18. Thus, a crank-shaped fiber construct 11 can be manufactured easily.

### Second Embodiment

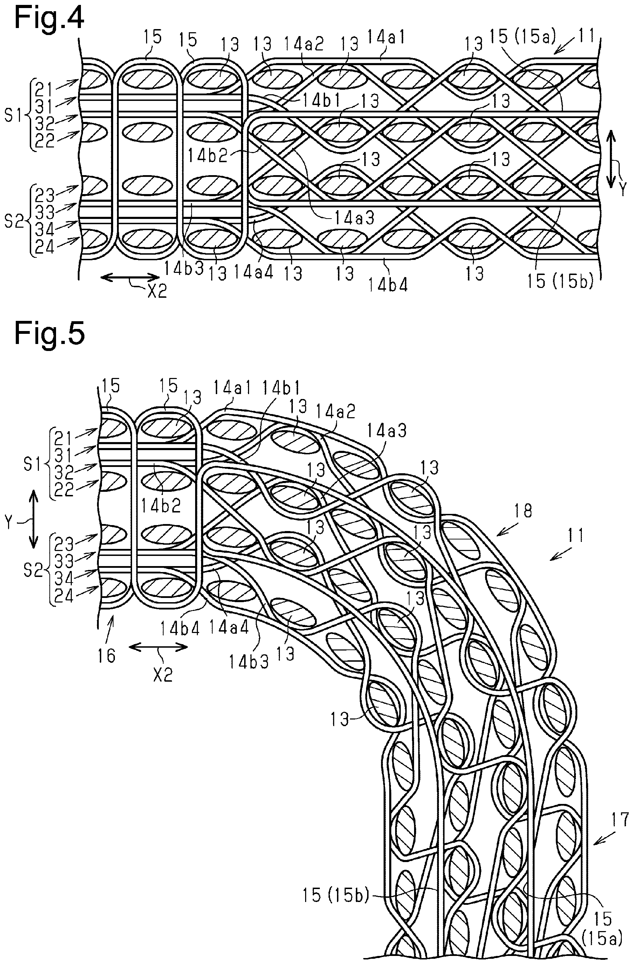

A fiber construct and a fiber-reinforced composite material according to a second embodiment of the present disclosure will now be described with reference to Figs. 4 and 5. In the description of the second embodiment, the portions similar to those of the first embodiment will not be described in detail.

As shown in Figs. 4 and 5, in the first flat portion 16, the first to fourth weft yarn layers 21 to 24 and the first to eighth warp yarn layers 31 to 38 are all bound by the binding threads 15 in the laminating direction Y. This restricts the weft yarns 13 from moving in the laminating direction Y and the second direction X2. The weft yarns 13 of the first to fourth weft yarn layers 21 to 24 extend straight in the first direction X1, and the warp yarns 14 of the first to fourth warp yarn layers 31 to 34 extend straight in the second direction X2. Further, all the weft yarns 13 are not engaged with the warp yarns 14 through folding of the weft yarns 13.

In the first flat portion 16, the first warp yarn layer 31 and the second warp yarn layer 32 are arranged between the first weft yarn layer 21 and the second weft yarn layer 22 adjacent to each other in the laminating direction Y. In the second embodiment, the first weft yarn layer 21 and the second weft yarn layer 22, the first warp yarn layer 31, and the second warp yarn layer 32 form a first laminate S1.

In the first flat portion 16, the third warp yarn layer 33 and the fourth warp yarn layer 34 are arranged between the third weft yarn layer 23 and the fourth weft yarn layer 24 adjacent to each other in the laminating direction Y. In the second embodiment, the third weft yarn layer 23, the fourth weft yarn layer 24, the third warp yarn layer 33, and the fourth warp yarn layer 34 form a second laminate S2.

In the first flat portion 16, the binding by the binding threads 15 is performed in the same manner as the first embodiment and thus will not be described in detail.

The second flat portion 17 and the bent portion 18 include the first to fourth weft yarn layers 21 to 24 and the first to fourth warp yarn layers 31 to 34.

In the second flat portion 17 and the bent portion 18, in the warp yarns 14 of the first warp yarn layer 31, the weft yarns 13 engaged with the warp yarns 14 through folding of the warp yarns 14 differ between the warp yarns 14 adjacent to the first direction X1. That is, in the warp yarns 14 adjacent to each other in the direction perpendicular to the planes of Figs. 4 and 5, the weft yarns 13 engaged with the front warp yarns 14 through folding of the front warp yarns 14 are different from the weft yarns 13 engaged with the rear warp yarns 14 through folding of the rear warp yarns 14. The warp yarns 14 that correspond to the first warp yarn layer 31 in the first flat portion 16 are classified into a first group and a second group. The first group includes a warp yarn 14a1. In the second flat portion 17 and the bent portion 18, the warp yarn 14a1 extends along the weft yarns 13 laid out in the second direction X2 in the first weft yarn layer 21. The warp yarn 14a1 of the first group is in a mode of being engaged with the weft yarns 13 on the opposite sides in the second direction X2 in the multiple weft yarns 13 by being folded along the surroundings of the cross-sections of these weft yarns 13 and in a mode of being engaged with a single weft yarns 13 adjacent to the opposite weft yarns 13 by being folded along the surroundings of the cross-section of the single weft yarn 13. These modes are alternately repeated in the second direction X2. To facilitate understanding, in Figs. 4 and 5, the warp yarn 14a1 of the first group of the first warp yarn layer 31 is folded so as to wave in multiple units. A single unit of the multiples units includes the three weft yarns 13 laid out in the second direction X2 of the first weft yarn layer 21 and includes the single weft yarn 13 adjacent to the three weft yarns 13. The number of the weft yarns is not necessarily limited to, for example, three or one.

In the two groups of the warp yarns 14 of the first warp yarn layer 31, the second group includes a warp yarn 14b1. The warp yarn 14b1 is in a mode of being engaged by being folded along the surroundings of the cross-section of a single weft yarn 13 of the second weft yarn layer 22 and in a mode of being engaged by being folded along the surroundings of the cross-section of the weft yarn 13 with which the warp yarn 14a1 of the first group is engaged in the weft yarns 13 of the first weft yarn layer 21. These modes are alternately repeated in the second direction X2. To facilitate understanding, in Figs. 4 and 5, the warp yarn 14b1 of the second group of the first warp yarn layer 31 is in a mode of being folded so as to entangle, from the inner side of the fiber construct 11, the surroundings of the cross-section of the weft yarn 13 of the second weft yarn layer 22 corresponding to the middle weft yarn 13 of the three weft yarns 13 in the above-described single unit of the first weft yarn layer 21 in the laminating direction Y and engaged with the weft yarn 13 of the second weft yarn layer 22, and the warp yarn 14b1 of the second group of the first warp yarn layer 31 is in a mode of being folded so as to entangle, from the outer side of the fiber construct 11, the surroundings of the cross-section of the single weft yarn 13 of the single unit and engaged with the weft yarn 13 of the first weft yarn layer 21. These modes are repeated in the second direction X2. The warp yarn 14b1 of the second group of the first warp yarn layer 31 extends diagonally with respect to the laminating direction Y to engage with the weft yarn 13 through the folding. Thus, in the first laminate S1, the first weft yarn layer 21 and the second weft yarn layer 22 are bonded to each other in the laminating direction Y in a mode in which the warp yarn 14b1 of the second group of the first warp yarn layer 31, which is arranged between the first weft yarn layer 21 and the second weft yarn layer 22, is engaged by being folded along the surroundings of the cross-sections of the weft yarns 13 of the first weft yarn layer 21 and the second weft yarn layer 22.

In the warp yarns 14 of the second warp yarn layer 32, the weft yarns 13 engaged with the warp yarns 14 through folding of the warp yarns 14 differ between the warp yarns 14 adjacent to each other in the first direction X1 (direction perpendicular to the planes of Figs. 4 and 5). The first group of the warp yarns 14 of the second warp yarn layer 32 includes a warp yarn 14a2. The warp yarn 14a2 is in a mode of being engaged by being folded along the surroundings of the cross-section of a single weft yarn 13 of the first weft yarn layer 21 and in a mode of being engaged by being folded along the surroundings of the cross-section of a single weft yarn 13 of the second weft yarn layer 22. These modes are repeated in the second direction X2. To facilitate understanding, in Figs. 4 and 5, the warp yarn 14a2 of the first group of the second warp yarn layer 32 is in a mode of being folded so as to entangle, from the outer side of the fiber construct 11, the surroundings of the cross-section of the middle weft yarn 13 of the three weft yarns 13 of the single unit of the first weft yarn layer 21 and engaged with the weft yarn 13 of the first weft yarn layer 21, and the warp yarn 14a2 of the first group of the second warp yarn layer 32 is in a mode of being folded so as to entangle, from the inner side of the fiber construct 11, the surroundings of the cross-section of the single weft yarn 13 of the second weft yarn layer 22 corresponding to a single weft yarn 13 of the single unit of the first weft yarn layer 21 in the laminating direction Y. These modes are repeated in the second direction X2. The warp yarn 14a2 of the first group of the second warp yarn layer 32 extends diagonally with respect to the laminating direction Y to engage with the weft yarn 13 through the folding. Thus, in the first laminate S1, the first weft yarn layer 21 and the second weft yarn layer 22 are bonded to each other in the laminating direction Y in a mode in which the warp yarn 14a2 of the first group of the second warp yarn layer 32, which is arranged between the first weft yarn layer 21 and the second weft yarn layer 22, is engaged by being folded along the cross-sections of the weft yarns 13 of the first weft yarn layer 21 and the second weft yarn layer 22.

Thus, in the second flat portion 17 and the bent portion 18 of the first laminate S1, the first laminate S1 is bound in the laminating direction Y partially through the engagement of the warp yarn 14b1 of the second group of the first warp yarn layer 31 and the warp yarn 14a2 of the first group of the second warp yarn layer 32, which are arranged between the first weft yarn layer 21 and the second weft yarn layer 22 adjacent to each other in the laminating direction Y, with the weft yarns 13 of the first weft yarn layer 21 and the second weft yarn layer 22 through folding.

The second group of the warp yarns 14 of the second warp yarn layer 32 includes a warp yarn 14b2. The warp yarn 14b2 is in a mode of being engaged with a single weft yarn 13 of the third weft yarn layer 23 by being folded along the surroundings of the cross-section of the weft yarn 13 and in a mode of being engaged with a weft yarn 13 with which the warp yarn 14a2 of the first group of the second warp yarn layer 32 engages by being folded along the surroundings of the cross-section of the weft yarn 13. These modes are repeated in the second direction X2. The engagements with the weft yarn 13 through the folding causes the warp yarn 14b2 of the second group of the second warp yarn layer 32 to extend diagonally with respect to the laminating direction Y. Thus, the warp yarn 14b2 of the second group of the second warp yarn layer 32 bonds the second weft yarn layer 22 and the third weft yarn layer 23 to each other in the laminating direction Y. Accordingly, the first laminate S1 and the second laminate S2 are bonded to each other in the laminating direction Y. In the present embodiment, the warp yarn 14b2 of the second group of the second warp yarn layer 32 functions as a second yarn for one of the laminates of the first laminate S1 and the second laminate S2 to bond the first laminate S1 and the second laminate S2 to each other in the laminating direction Y. That is, the first laminate S1 and the second laminate S2 are bonded to each other in the laminating direction Y in a mode in which the warp yarn 14b2 of the second group of the second warp yarn layer 32, which is a part of the warp yarns 14 of the first laminate S1 serving as one of the laminates of the first laminate S1 and the second laminate S2, engages with the weft yarns 13 of the second laminate S2 serving as the other one of the laminates. Thus, in the second flat portion 17 and the bent portion 18 of the first laminate S1, the warp yarns 14 are in a mode of binding the first weft yarn layer 21 and the second weft yarn layer 22 partially in the laminating direction.

In the warp yarns 14 of the third warp yarn layer 33, the weft yarns 13 that are engaged with the warp yarns 14 through folding of the warp yarns 14 differ between the warp yarns 14 adjacent to each other in the first direction X1 (direction perpendicular to the planes of Figs. 4 and 5). The first group of the warp yarns 14 of the third warp yarn layer 33 includes a warp yarn 14a3. The warp yarn 14a3 is in a mode of being engaged with a single weft yarn 13 with which the warp yarn 14b1 of the second group of the first warp yarn layer 31 engages by being folded along the surroundings of the cross-section of the weft yarn 13 and in a mode of being engaged by being folded along the surroundings of the cross-section of a single weft yarn 13 of the third weft yarn layer 23. These modes are repeated in the second direction X2. The engagements with the weft yarn 13 through the folding causes the warp yarn 14a3 of the first group of the third warp yarn layer 33 to extend diagonally with respect to the laminating direction Y. Thus, the warp yarn 14a3 of the first group of the third warp yarn layer 33 bonds the second weft yarn layer 22 and the third weft yarn layer 23 to each other in the laminating direction Y. Accordingly, the first laminate S1 and the second laminate S2 are bonded to each other in the laminating direction Y. In the present embodiment, the warp yarn 14a3 of the first group of the third warp yarn layer 33 functions as the second yarn for one of the laminates of the first laminate S1 and the second laminate S2 to bond the first laminate S1 and the second laminate S2 to each other in the laminating direction Y. In other words, the first laminate S1 and the second laminate S2 are bonded to each other in the laminating direction Y in a mode in which the warp yarn 14a3 of the first group of the third warp yarn layer 33, which is a part of the warp yarns 14 of the second laminate S2 serving as one of the laminates of the first laminate S1 and the second laminate S2, engages with the weft yarns 13 of the first laminate S1 serving as the other one of the laminates.

The second group of the third warp yarn layer 33 includes a warp yarn 14b3. The warp yarn 14b3 is in a mode of being engaged with a single weft yarn 13 of the fourth weft yarn layer 24 by being folded along the surroundings of the cross-section of the weft yarn 13 and in a mode of being engaged with a weft yarn 13 with which the warp yarn 14a3 of the first group of the third warp yarn layer 33 engages by being folded along the surroundings of the cross-section of the weft yarn 13. These modes are repeated in the second direction X2. The engagements with the weft yarn 13 through the folding causes the warp yarn 14b3 of the second group of the third warp yarn layer 33 to extend diagonally with respect to the laminating direction Y. Thus, the warp yarn 14b3 of the second group of the third warp yarn layer 33 bonds the third weft yarn layer 23 and the fourth weft yarn layer 24 to each other in the laminating direction Y. Accordingly, in the second laminate S2, the third weft yarn layer 23 and the fourth weft yarn layer 24 are bonded to each other in the laminating direction Y through the engagement of the warp yarn 14b3 of the second group of the third warp yarn layer 33, which is arranged between the third weft yarn layer 23 and the fourth weft yarn layer 24, with the weft yarns 13 of the third weft yarn layer 23 and the fourth weft yarn layer 24 by being folded along the surroundings of the cross-sections of these weft yarns 13.

In the warp yarns 14 of the fourth warp yarn layer 34, the weft yarns 13 engaged with the warp yarns 14 through folding of the warp yarns 14 differ between the warp yarns 14 adjacent to the first direction X1. The first group of the warp yarns 14 of the fourth warp yarn layer 34 includes a warp yarn 14a4. The warp yarn 14a4 is in a mode of being engaged with a single weft yarn 13 with which the warp yarn 14b2 of the second group of the second warp yarn layer 32 engages by being folded along the surroundings of the cross-section of the weft yarn 13 and in a mode of being engaged with a single weft yarn 13 of the fourth weft yarn layer 24 by being folded along the surroundings of the cross-section of the weft yarn 13. These modes are repeated in the second direction X2. The engagements with the weft yarn 13 through the folding causes the warp yarn 14a4 of the first group of the fourth warp yarn layer 34 to extend diagonally with respect to the laminating direction Y. Thus, the warp yarn 14a4 of the first group of the fourth warp yarn layer 34 bonds the third weft yarn layer 23 and the fourth weft yarn layer 24 to each other in the laminating direction Y.

Thus, in the second flat portion 17 and the bent portion 18 of the second laminate S2, the second laminate S2 is bound partially in the laminating direction Y through the engagement of the warp yarn 14b3 of the second group of the third warp yarn layer 33 and the warp yarn 14a4 of the first group of the fourth warp yarn layer 34, which are arranged between the third weft yarn layer 23 and the fourth weft yarn layer 24 adjacent to each other in the laminating direction Y, with the weft yarns 13 of the weft yarn layers 23 and 24.

The second group of the fourth warp yarn layer 34 includes a warp yarn 14b4 extending along the multiple weft yarns 13 of the fourth weft yarn layer 24, which are laid out in the second direction X2. The warp yarn 14b4 of the second group of the fourth warp yarn layer 34 is in a mode of being engaged with the weft yarns 13 on the opposite ends of these multiple warp yarns 13 by being folded along the surroundings of the cross-sections of the opposite weft yarns 13 and in a mode of being engaged with a single weft yarn 13 with which the warp yarn 14a4 of the first group of the fourth warp yarn layer 34 engages by being folded along the surroundings of the cross-section of the weft yarn 13. These modes are repeated in the second direction X2. Thus, in the second flat portion 17 and the bent portion 18 of the second laminate S2, the warp yarns 14 are in a mode of binding the third weft yarn layer 23 and the fourth weft yarn layer 24 partially in the laminating direction.

The warp yarns 14 bind the first laminate S1 in the laminating direction Y, bind the second laminate S2 in the laminating direction Y, and bond the first laminate S1 and the second laminate S2 to each other in the laminating direction Y. This prevents the bent portion 18 and the second flat portion 17 from being scattered in the laminating direction Y.

The binding threads 15 restrict the weft yarns 13 from moving in the laminating direction Y and the second direction X2 in the first flat portion 16. Further, in the second flat portion 17 and the bent portion 18, the binding thread 15a of the first group in the binding threads 15 is in a mode of being arranged between the first weft yarn layer 21 and the second weft yarn layer 22 to extend straight in the second direction X2 and is thus not engaged with any weft yarns 13. Further, in the second flat portion 17 and the bent portion 18, the binding thread 15b of the second group in the binding threads 15 is in a mode of being arranged between the third weft yarn layer 23 and the fourth weft yarn layer 24 to extend straight in the second direction X2 and is thus not engaged with any weft yarns 13.

Therefore, the second embodiment has the following advantages in addition to the same advantages as (1-1) to (1-4) of the first embodiment.
(2-1) In the bent portion 18 and the second flat portion 17, the first laminate S1 and the second laminate S2 are bound partially in the laminating direction Y by the warp yarns 14, and the first laminate S1 and the second laminate S2 are bonded to each other by the warp yarns 14 in the laminating direction Y. This prevents the weft yarns 13 and the warp yarns 14 of the bent portion 18 and the second flat portion 17 from being scattered in the laminating direction Y.
(2-2) The warp yarns 14 that bind the laminates S1 and S2 extend diagonally with respect to the laminating direction Y. Thus, since the warp yarns 14 bind the laminates S1 and S2 extend diagonally with respect to the laminating direction Y, the warp yarns 14 never extend straight in the laminating direction Y. Accordingly, since the warp yarns 14 engaged with the weft yarns 13 never bind the bent portion 18 and the second flat portion 17 in the second direction X2, the weft yarn 13 and the warp yarn 14 are allowed to move.

Each of the above-illustrated embodiments may be modified as follows. The above-described embodiments and the following modifications may be combined as long as they do not conflict with each other.

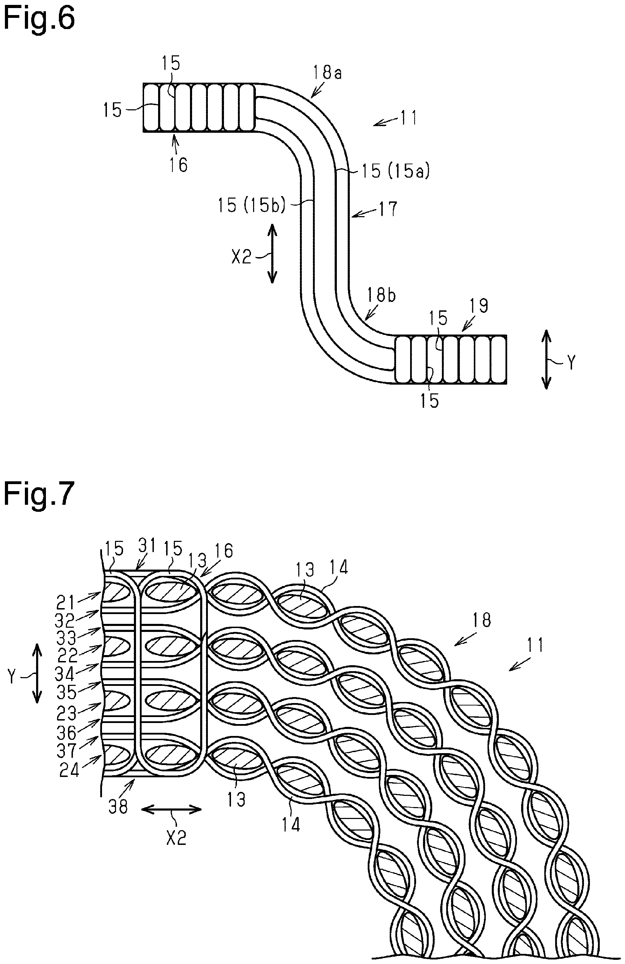

Fig. 6 shows a fiber construct 11 according to a modification. The fiber construct 11 includes, in the second direction X2, the first flat portion 16, a first bent portion 18a with a first end continuous with the first flat portion 16, and the second flat portion 17 continuous with a second end of the first bent portion 18a. Further, the fiber construct 11 may include a second bent portion 18b with a first end continuous with the second flat portion 17 and a third flat portion 19 continuous with a second end of the second bent portion 18b. In this case, the first bent portion 18a, the second flat portion 17, and the second bent portion 18b have the same structure as one of the first and second embodiments. That is, the first bent portion 18a and the second bent portion 18b in Fig. 6 are structured in the same manner as the bent portion 18 in the first and second embodiments, and the second flat portion 17 in Fig. 6 is structured in the same manner as the first flat portion 16 in the first and second embodiments. This structure prevents the binding threads 15 from binding in the entire laminating direction Y. The third flat portion 19 is bound by the binding threads 15 in the entire laminating direction Y. For example, the third flat portion 19 in Fig. 6 is structured in the same manner as the first flat portion 16 of the first and second embodiments.

As shown in Fig. 7, the binding threads 15 in the first embodiment may be changed to be in a mode of being absent in the second flat portion 17 and the bent portion 18, and the binding threads 15 may be arranged only in the first flat portion 16. Alternatively, as shown in Fig. 8, the binding threads 15 in the second embodiment may be changed to be in a mode of being absent in the second flat portion 17 and the bent portion 18, and the binding threads 15 may be arranged only in the first flat portion 16. In these cases, in the second flat portion 17 and the bent portion 18, the weft yarns 13 and the warp yarns 14 can be easily moved through bending as compared with, for example, when the binding threads 15 bind all the fiber layers or when the binding threads 15 perform partial binding in the laminating direction Y and the first direction X1.

In the first embodiment and the second embodiment, the second flat portion 17 and the bent portion 18 are shaped to be bent in the second direction X2, in which the yarn main axis of the warp yarns 14 extend. Instead, parts of the second flat portion 17 and the bent portion 18 may be shaped to be bent in the first direction X1 in addition to the second direction X2. That is, the second flat portion 17 and the bent portion 18 may not only be bent around the axis extending in the first direction X1 but also be bent along around another axis extending in the second direction X2. In this case, the weft yarns 13 configuring the parts bent in the first direction X1 and the second direction X2 are not arranged in parallel to one another, and the warp yarns 14 are also not arranged in parallel to one another.

In the first embodiment and the second embodiment, in the second flat portion 17 and the bent portion 18, as long as the weft yarns 13 and the warp yarns 14 are allowed to move in the second direction X2, the weft yarns 13 may be in a mode of being engaged with the warp yarns 14 by being folded along the surroundings of the cross-sections of the warp yarns 14 partially in the laminating directions of the second flat portion 17 and the bent portion 18.

In the second embodiment, in the bent portion 18 and the second flat portion 17, the positions of the weft yarns 13 with which the warp yarns 14 are engaged may be changed to the second direction X2.

In the second embodiment of Figs. 4 and 5, the laminates S1 and S2 are bound partially in the laminating direction Y by the warp yarns 14 other than the warp yarn 14a1 of the first group of the first warp yarn layer 31 and the warp yarn 14b4 of the second group of the fourth warp yarn layer 34. Thus, the warp yarns 14 are in a mode of being engaged with the weft yarns 13 of the weft yarn layers adjacent to each other in the laminating direction Y. However, the warp yarns 14 do not have to be engaged with the weft yarns 13 in this manner. The warp yarns 14 binding the laminates S1 and S2 partially in the laminating direction Y may be in a mode of extending across three-layer weft yarn layers to engage with the weft yarns 13 of the weft yarn layers of the opposite ends of the three-layer weft yarn layers in the laminating direction Y. For example, the warp yarn 14b1 of the second group of the first warp yarn layer 31 may in a mode of extending across the first weft yarn layer 21, the second weft yarn layer 22, and the third weft yarn layer 23 to engage with the weft yarn 13 of the first weft yarn layer 21 and the weft yarn 13 of the third weft yarn layer 23.

In a structure in which the weft yarns 13 and the warp yarns 14 are allowed to move in the laminating direction Y and the second direction X2, the shape of the fiber construct 11 does not have to be L-shaped and may be changed.

In the first flat portion 16, each binding thread 15 is folded for the corresponding weft yarn 13. However, the position where the binding thread 15 is folded may be changed in correspondence with, for example, a desired strength of the first flat portion 16.

The first yarns may be the warp yarns 14, and the second yarns may be the weft yarns 13.

In the first embodiment and the second embodiment, in the second flat portion 17 and the bent portion 18, the binding threads 15 may be in a mode of binding the first fiber layers and the second fiber layers partially in the laminating direction Y. In this case, the binding threads 15 simply need to be configured such that the binding threads 15 do not bind all the first fiber layers and the second fiber layers. Even in such a structure, in the second flat portion 17 and the bent portion 18, as compared with when the binding threads 15 bind all the fiber layers, the weft yarns 13 and the warp yarns 14 easily move through bending.

The technical ideas obtainable from the above embodiments and the modifications are described below.

The above-described fiber construct, wherein a dimension of the fiber construct extending through an inner side of the bent portion in the second direction slightly deviates from a dimension of the fiber construct extending through an outer side of the bent portion in the second direction.

### DESCRIPTION OF THE REFERENCE NUMERALS

S1) First Laminate S2) Second Laminate; X1) First direction; X2) Second Direction; 10) Fiber-Reinforced Composite Material; 11) Fiber Construct; 12) Matrix Resin; 13) Weft as First Yarn; 14) Warp as Second Yarn; 15) Binding Thread; 16) First Flat Portion; 17) Second Flat Portion; 18) Bent Portion; 21-24) First to Fourth Weft Yarn Layers as First Fiber Layers; 31-38) First to Eighth Warp Yarn Layers as Second Fiber Layers

## Claims

1. A fiber construct comprising:
first fiber layers including a first yarn; and
second fiber layers including a second yarn that intersects the first yarn, wherein
the first fiber layers and the second fiber layers are laminated,
an extending direction of a yarn main axis of the first yarn is referred to as a first direction and an extending direction of a yarn main axis of the second yarn is referred to as a second direction,
the fiber construct has a plate shape such that at least a first flat portion, a bent portion, and a second flat portion are continuous with one another in the second direction,
a direction in which the first fiber layers and the second fiber layers are laminated is referred to as a laminating direction,
in the first flat portion, the first yarn extends straight in the first direction and the second yarn extends straight in the second direction,
the fiber construct further comprises a binding thread that binds all the first fiber layers and the second fiber layers in the laminating direction in the first flat portion,
the binding thread is configured to be in any one of a mode of extending straight in the bent portion and the second flat portion, a mode of binding the first fiber layers and the second fiber layers partially in the laminating direction in the bent portion and the second flat portion, and a mode of being absent in the bent portion and the second flat portion, and
in the bent portion and the second flat portion, the second yarn is configured to be in any one of a mode of engaging with only the first yarn of a specific one of the first fiber layers and a mode of binding the first fiber layers partially in the laminating direction.

2. The fiber construct according to claim 1, wherein
in the first flat portion, the first fiber layer is arranged between a pair of the second fiber layers adjacent to each other in the laminating direction, and
in the bent portion and the second flat portion, the second yarn of the pair of the second fiber layers adjacent to each other in the laminating direction with the specific one of the first fiber layers located in between is in a mode of engaging with each one of the first yarns of the specific one of the first fiber layers alternately from opposite sides in the laminating direction.

3. The fiber construct according to claim 1, wherein
in the first flat portion, a first laminate and a second laminate are laid out in the laminating direction,
the first laminate is formed by arranging a pair of the second fiber layers between a pair of the first fiber layers adjacent to each other in the laminating direction,
the second laminate is formed by arranging a pair of the second fiber layers between a pair of the first fiber layers adjacent to each other in the laminating direction, and
in the bent portion and the second flat portion,
in the first laminate and the second laminate, the pair of the second fiber layers arranged between the first fiber layers adjacent to each other in the laminating direction includes the second yarns, wherein a part of the second yarns is in a mode of engaging with the first yarn of the first fiber layers so that the pair of the first fiber layers adjacent to each other in the laminating direction are bound to each other partially in the laminating direction, and
a part of the second yarns of one of the laminates of the first laminate and the second laminate is in a mode of engaging with the first yarn of the other one of the laminates of the first laminate and the second laminate so that the first laminate and the second laminate are bonded to each other in the laminating direction.

4. The fiber construct according to any one of claims 1 to 3, wherein a dimension of the fiber construct extending through an inner side of the bent portion in the second direction is substantially the same as a dimension of the fiber construct extending through an outer side of the bent portion in the second direction.

5. A fiber-reinforced composite material formed by impregnating a reinforcing base material with matrix resin, **characterized in that** the reinforcing base material is formed by the fiber construct according to any one of claims 1 to 4.

6. A manufacturing method for the fiber construct, the manufacturing method comprising:
preparing first fiber layers including a first yarn;
preparing second fiber layers including a second yarn that intersects the first yarn;
laminating the first fiber layers and the second fiber layers with an extending direction of a yarn main axis of the first yarn referred to as a first direction and an extending direction of a yarn main axis of the second yarn referred to as a second direction, wherein a direction in which the first fiber layers and the second fiber layers are laminated is referred to as a laminating direction;
shaping the fiber construct into a plate such that at least a first flat portion, a bent portion, and a second flat portion are continuous with one another in the second direction;
extending the first yarn straight in the first direction and extending the second yarn straight in the second direction in the first flat portion;
binding all the first fiber layers and the second fiber layers in the laminating direction in the first flat portion using a binding thread;
configuring the binding thread to be in any one of (a) a mode of extending straight in the bent portion and the second flat portion, (b) a mode of binding the first fiber layers and the second fiber layers partially in the laminating direction in the bent portion and the second flat portion, and (c) a mode of being absent in the bent portion and the second flat portion; and
configuring, in the bent portion and the second flat portion, the second yarn to be in any one of a mode of engaging with only the first yarn of a specific one of the first fiber layers and a mode of binding the first fiber layers partially in the laminating direction.

7. The manufacturing method according to claim 6, the manufacturing method further comprising:
in the first flat portion, arranging the first fiber layer between a pair of the second fiber layers adjacent to each other in the laminating direction, and
in the bent portion and the second flat portion, engaging the second yarn of the pair of the second fiber layers adjacent to each other in the laminating direction, with the specific one of the first fiber layers located in between, with each one of the first yarns of the specific one of the first fiber layers alternately from opposite sides in the laminating direction.

8. The manufacturing method according to claim 6, the manufacturing method further comprising:
in the first flat portion,
forming a first laminate by arranging a pair of the second fiber layers between a pair of the first fiber layers adjacent to each other in the laminating direction;
forming a second laminate by arranging a pair of the second fiber layers between a pair of the second fiber layers adjacent to each other in the laminating direction; and
laying out the first laminate and the second laminate in the laminating direction; and
in the bent portion and the second flat portion,
engaging, in the first laminate and the second laminate, a part of the second yarns of the pair of the second fiber layers arranged between the first fiber layers adjacent to each other in the laminating direction with the first yarn of the first fiber layers so that the pair of the first fiber layers adjacent to each other in the laminating direction are bound to each other partially in the laminating direction; and
engaging a part of the second yarns of one of the laminates of the first laminate and the second laminate with the first yarn of the other one of the laminates of the first laminate and the second laminate so that the first laminate and the second laminate are bonded to each other in the laminating direction.
